(19) Europäisches Patentamt

European Patent Office

Office européen des brevets

(11) Veröffentlichungsnummer: **0 432 613 A2**

(12) **EUROPÄISCHE PATENTANMELDUNG**

(21) Anmeldenummer: 90123159.7

(22) Anmeldetag: 04.12.90

(51) Int. Cl.⁵ **H01M 2/12**

(30) Priorität: 09.12.89 DE 3940753

(43) Veröffentlichungstag der Anmeldung:
**19.06.91 Patentblatt 91/25**

(84) Benannte Vertragsstaaten:
**DE ES FR GB**

(71) Anmelder: **ABB CEAG Licht- und
Stromversorgungstechnik GmbH
Senator-Schwarz-Ring 26
W-4770 Soest(DE)**

(72) Erfinder: **Harnischmacher, Friedhelm
Heimkerweg 35
W-5750 Menden(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

(54) **Verschluss für eine explosionsgeschützte Batterie.**

(57) Ein Verschluß für eine explosionsgeschützte und/oder schlagwettergeschützte Batterie besitzt eine in das Batteriegehäuse (11) einschraubbare Hülse (25) die an ihrem Außenende einen Boden (14) mit einer zentralen Bohrung (15) aufweist. Die zentrale Bohrung (15) ist im Inneren der Hülse von einem nach innen vorspringenden zylindrischen Kragen (17) umfaßt. Das dem Boden (14) entgegengesetzt liegende Ende der Hülse, also daß im Inneren der Batterie liegende Ende ist bis auf einen zentralen Durchlaß (19) verschlossen. Zwischen dem inneren Ende der Hülse (12) und dem freien Ende des Kragens (17) ist ein beweglicher Kolben (21) in der Hülse (12) geführt, wobei zwischen der Außenfläche des Kolbens (21) und der Innenfläche der Hülse (12) ein Luftspalt vorgesehen ist, der den Vorschriften für Explosions- und/oder Schlagwetterschutz genügt.

Wenn innerhalb der Batterie Rekombinatoren vorgesehen sind, die Sauerstoff mit Wasserstoff zu Wasser rekombinieren, dann kann der Kolben mittels einer Druckfeder (24) gegen den freien Rand des Kragens dauernd gedrückt werden.

EP 0 432 613 A2

## VERSCHLUSS FÜR EINE EXPLOSIONSGESCHÜTZTE BATTERIE

Die Erfindung betrifft einen Verschluß für eine explosionsgeschützte Batterie gemäß dem Oberbegriff des Anspruches 1.

Für Batterien, die in explosions- oder schlagwettergefährdeten Räumen eingesetzt werden, ist ein sog. Kammerhoff-Verschluß bekannt geworden, der eine Hülse aufweist, die einen Querboden besitzt, an dem ein ins Innere der Batterie hineinragender Kragen angeformt ist. Die Hülse wird in das Batteriegehäuse eingeschraubt und überragt den Kragen, wodurch ein ins Innere der Batterie hin offener Ringraum gebildet ist, der dann, wenn die Batterie auf den Kopf gestellt wird, zur Aufnahme der in der Batterie vorhandenen Flüssigkeit dient; dadurch kann nur diejenige Menge nach außen gelangen, die sich beim Umstülpen innerhalb des Kragens befindet.

Damit Gase von im Inneren der Batterie auftretenden Explosionen nicht nach außen gelangen können, ist die Hülse nach außen mittels eines aus Sintermaterial bestehenden Stopfens verstopft; ggf. kann zwischen der Querwand, an dem der Kragen angeformt ist, und dem Stopfen ein Kolben vorgesehen sein, der gegen ein Röhrchen, daß den Stopfen aus Sintermaterial durchgreift, mittels einer Feder zum Anlegen gebracht wird.

Auf diese Weise kann zwar von außen Flüssigkeit ins Innere der Batterie eingefüllt werden, nicht aber Flüssigkeit von Innen nach außen ausdringen.

Weitere ähnliche Verschlüsse sind beispielsweise der DE-OS 19 65 519 und der GB-PS 1 095 499 zu entnehmen.

Aufgabe der Erfindung ist es, einen Verschluß der eingangs genannten Art zu schaffen, der eine Durchzündung in die Umgebung sicher verhindert und bei dem Verätzungsgefahr vermieden ist, wobei der Verschluß selbst einfach herstellbar ist.

Diese Aufgabe wird erfindungsgemäß gelöst durch die kennzeichnenden Merkmale des Anspruches 1.

Erfindungsgemäß befindet sich im Inneren der Hülse ein Kolben, der zumindest dann, wenn die Batterie auf den Kopf gestellt wird, gegen den zylindrischen Kragen zum Anliegen kommt, so daß keine Flüssigkeit nach außen dringen kann. Dadurch, daß die Kolbenaußenfläche und die Hülseninnenfläche so bemessen sind, daß sich dazwischen ein den Explosions- oder Schlagwetterschutz-Vorschriften entsprechender Luftspalt bildet, können im Inneren der Batterie auftretende Explosionen auch nicht nach außen durchschlagen und die umgebende explosible Atmosphäre zünden, wodurch auf diese Weise einfach ein Verschluß geschaffen worden ist, der für eine druckfest gekapselte Batterie optimal verwendet werden kann.

Zum Verschließen des Kolbenraumes befindet sich am inneren Ende der Hülse ein einen zentralen Durchlaß enthaltenden Stopfen, der einen ins Innere der Hülse ragenden Führungsvorsprung aufweist. Dieser Führungsvorsprung wird von dem Kolben, der als offener Topf ausgebildet ist, umgriffen und dient so zur Führung. Auch zwischen der Außenfläche des Führungsvorsprunges und der Innenfläche des Kolbens kann ein entsprechender Luftspalt vorgesehen sein.

In Normallage ist ohne weiteres eine Entgasung der Batterie möglich, in dem in der Batterie gebildetes Gas durch die Spalte zwischen dem Führungsvorsprung und der Innenfläche des Kolbens und zwischen der Außenfläche des Kolbens und der Innenfläche der Hülse möglich. Wenn der Kolben nach unten hin abgesenkt ist, kann die Batterie auch leicht aufgefüllt werden, indem Flüssigkeit durch die zentrale Bohrung in der Hülse durch den Zwischenraum zwischen dem Kolben und der Hülse bzw. dem Kolben und dem Führungsvorsprung und durch den zentralen Durchbruch im Verschlußstopfen eingespritzt wird.

In einer weiteren Ausgestaltung der Erfindung besteht die Möglichkeit, zwischen dem Verschlußstopfen und dem freien Rand des Kolbens eine Druckfeder vorzusehen, die den Kolben dauernd gegen das freie Ende des Kragens drückt. Diese Lösung darf dann nicht vorgesehen werden, wenn freies Entgasen der Batterie ermöglicht werden soll. Eine solche Abdichtung ist nur dann möglich, wenn Rekombinatoren, die das Wasserstoffgas mit Sauerstoff zu $H_2O$ rekombinieren, eingesetzt werden.

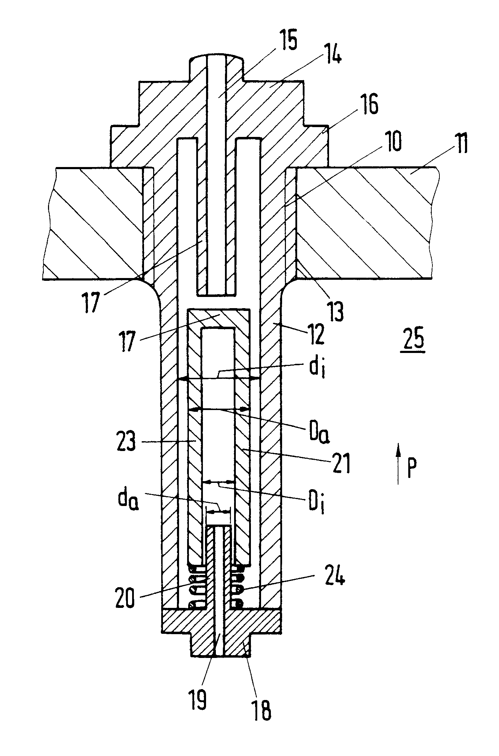

Anhand der Zeichnung, in der ein Ausführungsbeispiel der Erfindung dargestellt ist, soll die Erfindung näher erläutert und beschrieben werden.

Es zeigt:

Die einzige Figur eine Schnittansicht durch einen erfindungsgemäßen Verschluß.

Innerhalb einer Innengewindebohrung 10 eines Batteriegehäuses 11 ist eine langgestreckte, zylindrische Hülse 12 mit ihrem Außengewinde 13 eingeschraubt, die an ihrem einen, dem äußeren Ende einen Boden 14 aufweist, in dem eine zentrale Bohrung 15 eingebracht ist, deren Mittelachse der Mittelachse der Hülse entspricht. Zum besseren Verschrauben besitzt die Hülse einen Flanschbord 16, der als Anschlag beim Einschrauben in das Batteriegehäuse dient. Auf der Innenfläche des Bodens 14 ist ein Kragen 17 angeformt, der parallel zu der Hülsenerstreckung vom Boden 14 aus vorspringt und die Bohrung 15 umgibt. Der Außendurchmesser des Kragens 17 ist deutlich geringer als der Innendurchmesser der Hülse 12.

Das sich im Inneren der Hülse befindliche freie Hülsenende ist mittels eines Verschlußstopfens 18 verschlossen, wobei der Verschlußstopfen 18 beispielsweise durch Einschrauben oder - wie hier - durch Verschweißen am freien Ende der Hülse befestigt ist. Der Verschlußstopfen 18 besitzt einen zentralen Durchlaß 19, dessen Mittelachse der Mittelachse der Hülse 12 bzw. des Kragens 17 entspricht und die von einem Führungsvorsprung 20 umgeben ist, der ähnlich wie der Kragen 17 vom Verschluß aus 18 ins Innere der Hülse hineinragt. Die freien Enden des Kragens 17 und des Führungsvorsprunges 20 stehen sich quasi gegenüber.

Innerhalb der Hülse 12 befindet sich ein Kolben 21, der die Form eines Topfes mit einem Topfboden 22 und einem Topfrand 23 aufweist, wobei der Innendurchmesser $D_i$ der Topfwandung 23 geringfügig größer ist als der Außendurchmesser $d_a$ des Führungsvorsprunges, und der Außendurchmesser $D_a$ der Topfwand 23 kleiner ist als der Innendurchmesser $d_i$ der Hülse 12, wobei die Durchmesser so bemessen sind, daß sich zumindest zwischen der Außenfläche des Topfrandes 23 und der Innenfläche der Hülse 12 ein Luftspalt bildet, der den Explosions- oder Schlagwetterschutz-Vorschriften entspricht. Das gleiche gilt auch für den Zwischenraum zwischen dem Topfrand und dem Führungsvorsprung 20.

Der Verschluß der einzigen Figur zeigt zwischen dem Verschlußstopfen 18 und dem freien Topfrand des Kolbens 21 eine Feder 24, die den Kolben dauernd in Pfeilrichtung P zu drücken sucht, wo sich dann der Boden des Topfes, also der Kolbenboden 22 gegen das freie Ende des Kragens 17 anlegt. Die Anordnung ist nicht so gezeichnet, sondern es ist angedeutet, daß sich die Feder 24 in zusammengedrücktem Zustand befindet, dann beispielsweise wenn durch die zentrale Bohrung 15 Flüssigkeit ins Innere der Batterie, welches Innere mit der Bezugsziffer 25 bezeichnet ist, hineingedrückt wird.

Wenn die Feder 24 nicht vorhanden ist, dann legt sich der freie Rand des Kolbens 21 gegen den Boden des Verschlußstopfens 18, wenn sich die Batterie in Normallage befindet.

Wenn sich die Batterie nicht in Normallage befindet, sondern auf dem Kopf steht, dann legt sich der Kolben 22 gegen das freie Ende des Kragens 17 an und verschließt auf diese Weise die Zentralbohrung 15 gegen Austritt von Flüssigkeit nach außen.

Die Ausführung mit der Feder 24 wird dann verwendet, wenn innerhalb der Batterie sog. Rekombinatoren vorgesehen sind, d. h. Mittel, mit denen Wasserstoffgas und Sauerstoff zu Wasser rekombiniert wird.

Der Verschlußstopfen gemäß der Figur auch ohne die Feder ist optimal verwendbar bei einer druckfest gekapselten Batterie. Die Befüllung der Batterie erfolgt, wie oben erwähnt, durch die zentrale Bohrung 15, über die Spalte zwischen der Außenfläche des Kolbens und der Innenfläche der Hülse sowie der Außenfläche des Fortsatzes 20 und der Innenfläche des Kolbens und durch den zentralen Durchlaß 19 im Stopfen. Wegen des Luftspaltes zwischen dem Kolben und der Hülse bzw. dem Kolben und dem Führungsvorsprung kann eine im Inneren der Batterie auftretende Explosion nicht nach außen hindurchwirken, weil die dabei entstehenden heißen Gase sich zwischen den Spalten ausreichend abkühlen können. Im Gegensatz zu den bekannten Batterien kann bei der Batterie, die mit dem erfindungsgemäßen Verschluß ausgestattet ist, sehr wohl eine Explosion im Inneren der Batterie stattfinden, vorausgesetzt, daß das Batteriegehäuse dem Explosionsdruck standhält, womit die mit dem erfindungsgemäßen Verschluß ausgestattete Batterie als eine explosions- oder schlagwettergeschützte, druckfest gekapselte Batterie ausgebildet sein kann.

## Ansprüche

1. Verschluß für eine explosionsgeschützte und/oder schlagwettergeschützte Batterie, mit einer in die Batterie einschraubbaren Hülse, die an ihrem Außenende einen Boden mit einer zentralen Bohrung aufweist, mit einem die zentrale Bohrung umgebenden, nach innen vorspringenden und von der Hülse überragten Kragen, dadurch gekennzeichnet, daß das dem Boden entgegengesetzt liegende Ende (Innenende) der Hülse bis auf einen zentralen Durchlaß (19) verschlossen ist, daß zwischen dem Innenende und dem freien Ende des Kragens (17) ein beweglich in der Hülse (12) geführter Kolben (21) vorgesehen ist, und daß zwischen der Außenfläche des Kolbens und der Innenfläche der Hülse ein Luftspalt gebildet ist, dessen Abmessungen den Vorschriften des Explosions- und/oder Schlagwetterschutzes genügen.

2. Verschluß nach Anspruch 1, dadurch gekennzeichnet, daß das Innenende der Hülse (12) mittels eines den zentralen Durchlaß (19) enthaltenden Stopfens (18) verschlossen ist, der einen ins Innere der Hülse ragenden Führungsvorsprung (20) aufweist.

3. Verschluß nach Anspruch 2, dadurch gekennzeichnet, daß der Kolben (21) als zum Innenende hin offener Topf ausgebildet ist, dessen Topfrand den Führungsvorsprung (20) teilweise umgreift und durch diesen in jeder Stellung geführt ist.

4.  Verschluß nach einem der vorherigen Ansprüche, dadurch gekennzeichnet, daß zwischen dem Stopfen (18) und dem freien Topfrand des Kolbens (21) eine Druckfeder (24) vorgesehen ist, die den Kolben (21) dauernd gegen das freie Ende des Kragens (17) drückt.